Europäisches Patentamt

European Patent Office

Office européen des brevets

(11) Publication number: **0 348 559**
**A1**

## (12) EUROPEAN PATENT APPLICATION

(21) Application number: 88304912.4

(22) Date of filing: 31.05.88

(51) Int. Cl.4: **G11B 5/48 , G11B 5/10 , G11B 5/56**

Amended claims in accordance with Rule 86 (2) EPC.

(43) Date of publication of application:
**03.01.90 Bulletin 90/01**

(84) Designated Contracting States:
**AT BE CH DE ES FR GB GR IT LI LU NL SE**

(71) Applicant: Hewlett Packard Ltd
**Nine Mile Ride**
**Wokingham, Berkshire RG11 3LL(GB)**

(72) Inventor: **Clark, Alex**
**12 Balmoral Close**
**Stoke Gifford Bristol BS6 6NL(GB)**
Inventor: **Topham, Andrew Damian**
**8 Blackwells**
**Dursley, Glos.(GB)**
Inventor: **Mansbridge, Geoffrey Winfield**
**39 Walk Mill Lane Kingswood**
**Wotton-under-Edge, Glos. GL12 8RZ(GB)**

(74) Representative: **Smith, Norman Ian et al**
**F.J. CLEVELAND & COMPANY 40-43**
**Chancery Lane**
**London WC2A 1JQ(GB)**

(54) Read/write heads for tape device and their mounting.

(57) A read/write head (10) for a tape recording device is generally block shaped and formed with alignment surfaces (18) which are generally coplanar with the read/write gaps (16, 17). This construction greatly facilitates accurate mounting of the head in a tape device. Also disclosed is a tool for mounting the head.

*FIG.1*

## Read/Write Heads for Tape Device and their Mounting

This invention relates to tape devices. In particular it relates to read/write heads used in tape devices.

Tape devices whether of the spool-to-spool type or of the cartridge type employ read/write heads which are used to write magnetically to magnetic recording tape or read magnetically from such recording tape. Such heads are normally generally block shaped and have a face located parallel to and juxtaposed with the path along which the tape is arranged to move. This face has read/write gaps which are spaced apart in the direction of movement of the tape. The read/write gaps extend along the face of the block in a direction generally perpendicular to the direction of movement of the tape.

For optimum performance of the head it is important that the read/write gaps are accurately aligned perpendicular to the longitudinal direction of the tape movement.

Conventionally alignment is carried out mechanically using one of the two side faces of the head as a reference. This involves setting that reference face so that it is perpendicular to the direction of tape movement. This technique relies on the reference face being parallel to the plane containing the read/write gaps. Typically the read/write heads are constructed in three sections with the read/write gaps being formed at each junction of the central section with the two outside sections. Because of parallelism errors in the three sections the gaps at the internal junctions are not be perfectly aligned with the outer faces and hence parallelism errors occur. This causes an azimuth error in the head which in turn results in two problems. The first of these is misalignment of the centre lines of the read and write gaps and the other is signal loss due to non zero azimuth recording. Furthermore the outer face of the head typically has to be glued to a bracket which has only a very small area for location of a mounting tool. Hence accurate mounting of the head has been difficult.

Electrical alignment techniques have also been used in which the head is adjusted until the read signal strength is seen to be a maximum. However this method is time consuming and not entirely practical.

An object of the present invention is to provide a construction of read/write head which reduces the above problems.

According to one aspect of the present invention there is provided a read/write head for a tape recording device which comprises a generally block shaped body on one surface of which are defined read/write gaps, the head being so shaped and configured as to provide one or more surfaces which permit alignment of the head in a recording device, said surface or surfaces being generally co-planar with said read/write gaps.

The head may comprise three portions, a central portion, and two outer portions, the read/write gaps being defined at the junctions of said portions and said central portion portion having a greater axial extent than the two outer portions, the alignment surfaces being defined on said extending part of the central portion.

According to another aspect of the present invention there is provided a tool for use in mounting in a tape device a head wherein said tool comprises a base or frame frame having locating elements, said base or frame being so shaped and configured that said locating elements can be received by guides on the tape device, said base or frame carrying a mounting arrangement including alignment elements which can locate the head accurately in said base or frame, at least some of said alignment elements being arranged to engage said alignment surfaces on said head, and said mounting arrangement being so located on said base or frame that when a head is located by said locating elements and the tool located in a tape device said head is correctly positioned relative to the path of the tape in the tape device.

The invention will be described now by way of example only, with particular reference to the accompanying drawing. In the drawings:

Figure 1 is a perspective view of a read/write head in accordance with the present invention,

Figure 2 is a perspective view of a tool for use use in mounting a read/write head in a cartridge type tape device, and

Figure 3 illustrates the operation of the headmount tool.

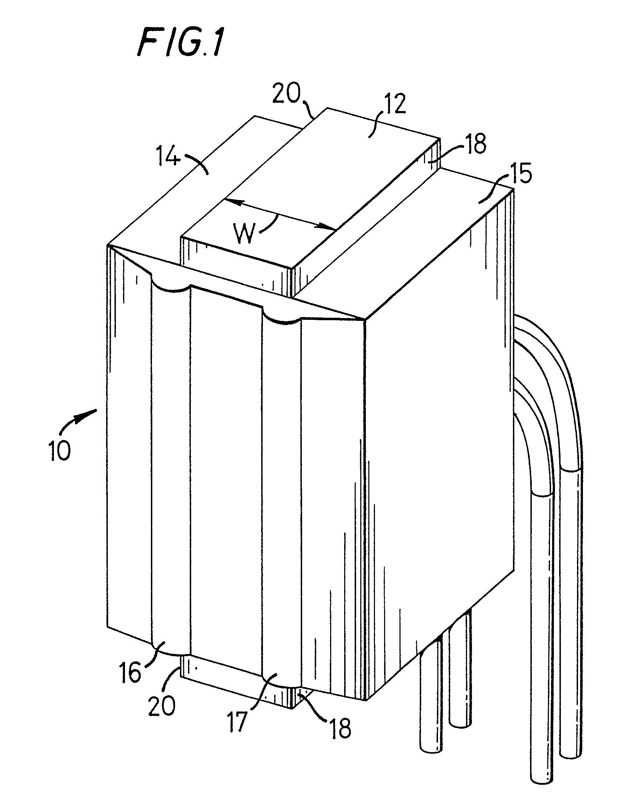

Referring to Figure 1 of the drawings, a read write head for use in a tape device comprises a generally block shaped element 10. The head is constructed in three portions, namely a central portion 12 and two outer portions 14, 15 which are located on and secured to opposite sides of the central portion 12. Read and write gaps 16, 17 are formed along the junction of each outer portion 14, 15 with the central portion 12.

It will be seen that the central portion 12 extends axially above and below the two outer portions 14, 15. The upper and lower extending sections of the central portion have side faces 18, 20 which are essentially co-planar with the read/write gaps. As will be seen these faces 18 and 20 are used as reference surfaces for accurately aligning the head in the tape device so that the read write gaps can be aligned perpendicular to the direction of movement of the tape through the device.

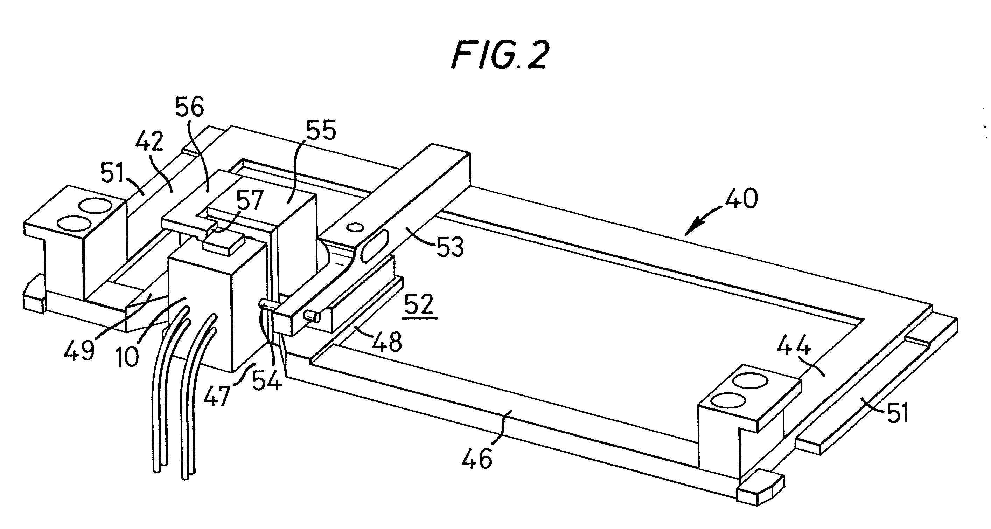

A tool which can be used to mount the head in a tape device, is illustrated in Figure 2.

Where the head is to be used in a tape device which is arranged to receive tape cartridges, the location of the head in the tape device can be achieved using a mounting tool of the type shown in Figure 2 of the drawings. This tool essentially comprises a base 40 which is sized to correspond substantially with that of a cartridge tape. The base is generally rectangular and has lateral edge portions 42, 44 designed with locating flanges 51 which are so configured that when the tool is located in the tape cartridge compartment of a tape device it takes up the same position relative to a read/write head as would the tape cartridge. The front of the base 46 is interrupted at 47 and has spaced inwardly projecting parts 48, 49 which carry a mounting arrangement 52 including a block 55. The block 55 carries a forwardly extending upper leg 56 having an end surface 57 which is designed to locate against one of the upper reference surfaces 18, 20 on the read/write head. The block 55 also supports a similar lower leg which contacts one of the lower reference surfaces on the read/write head. The mounting arrangement also carries a forwardly projecting bar 53 which supports a laterally extending pin 54. The bar 53 is pivotally mounted on the part 48 so that it can pivot in plane parallel to the base 40. The bar is biased by a spring (not shown) so that the pin 54 is urged toward the side face of a head 10. A read/write head 10 is located in the tool such that it contacts the front surface of the block 55. The surfaces 57 on the upper and lower legs 56 contact the reference surfaces 18, 20 on the head, and the pin 54 contacts a side surface of the head to restrain it against lateral movement.

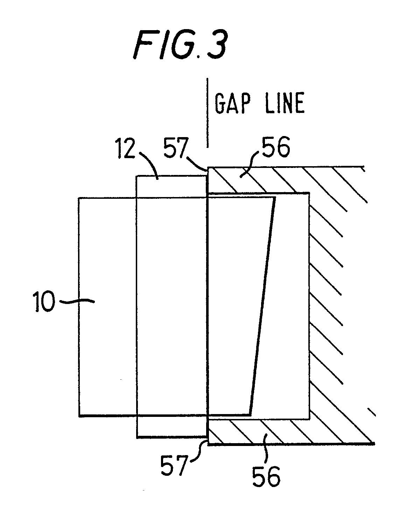

With the head 10 mounted in the mounting tool in this manner, the mounting tool is located by means of locating flanges 51 in a tape device and the head can be secured in position within the tape drive by any suitable means such as adhesively. The tool can then be removed without the head leaving the head accurately mounted in the tape drive. Because the tool contacts the head surface along a line extending through the read/write gaps, the prior art problems concerning parallelism errors are essentially avoided. This is illustrated in Figure 3 of the drawings which shows the way in which the surfaces 57 on the legs 56 contact the head along the line of a gap 16. By mounting the head in this way it can be secured in a tape device so that the gaps 16, 17 extend perpendicular to the direction of tape movement.

To mount the head accurately within a cartridge type tape device the head 10 is located in the tool as shown in Figure 2 of the drawings. The tool is then positioned in the cartridge compartment of the tape device. The tool is machined such that when it is located in this compartment, the head is in its correct operating position within the tape device. The head can then be secured in this position by any suitable means, e.g. adhesively.

It will thus be seen that there has been provided a read/write head for a tape device which can be accurately aligned within a tape device by means of a relatively simple tool or jig. The accurate alignment of the head is achieved by referencing directly from the line of the read/write gaps of the head. In addition the extension of the central portion 12 of the read/write head provides a reliable contact surface for the headmount tool which is used to mount the head in the tape device.

## Claims

1. A read/write head for a tape recording device which comprises a generally block shaped body (10) on one surface of which are defined read/write gaps (16, 17), characterised in that the head is so shaped and configured as to provide one or more surfaces (18) which permit alignment of the head in a recording device, said surface or surfaces being generally co-planar with said read/write gaps.

2. A head according to claim 1, characterised in that the head comprises three portions (12), a central portion, and two outer portions (14,15), the read/write gaps (16, 17) being defined at the junctions of said portions and said central portion having a greater axial extent than the two outer portions, the alignment surfaces (18) being defined on said extending part of the central portion.

3. A tool for use in mounting in a tape device a head according to claim 1 or claim 2, characterised in that said tool comprising a base or frame (40) having locating elements (51), said base or frame being so shaped and configured that said locating elements can be received by guides on the tape device, said base or frame carrying a mounting arrangement (52) including alignment elements (56) which can locate the head accurately in said base or frame, at least some of said alignment elements being arranged to engage said alignment surfaces (18) on said head, and said mounting arrangement (52) being so located on said base or frame that when a head is located by said locating elements and the tool located in a tape device said head is correctly positioned relative to the path of the tape in the tape device.

4. A tool according to claim 3, characterised in that said alignment elements include upper and lower limbs (56) having surfaces (57) for engaging the alignment surfaces (18) on the head.

5. A tool according to claim 4, characterised in that the alignment elements include a pin (54) arranged to engage a side surface of the head to maintain the upper and lower limbs in contact with the alignment surfaces.

6. A combination of a head according to claim 1 or claim 2 and a tool according to any one of claims 3 to 5.

Amended claims in accordance with Rule 86(2) EPC.

1. A tool for use in mounting in a tape device a read/write head of the type which comprises a generally block shape body (10) on one surface of which are defined read/write gaps (16, 17), the head being so shaped and configured as to provide one or more surfaces which permit alignment of the head in a recording device, said tool being characterised in that it comprises a base or frame (40) having locating elements (51), said base or frame being so shaped and configured that said locating elements can be received by guides on the tape device, said base or frame carrying a mounting arrangement (52) including alignment elements (56) which can locate the head accurately in said base or frame, at least some of said alignment elements being arranged to engage said alignment surfaces (18) on said head, and said mounting arrangement (52) being so located on said base or frame that when a head is located by said locating element and the tool located in a tape device, said head is accurately positioned relative to the path of the tape and the tape device.

2. A tool according to claim 1, characterised in that said alignment elements include upper and lower limbs (56) having surfaces (57) for engaging the alignment surfaces (18) on the head.

3. A tool according to claim 2, characterised in that the alignment elements include a pin (54) arranged to engage a side surface of the head to maintain the upper and lower limbs in contact with the alignment surfaces.

4. A tool according to any preceding claim characterised in that said base (40) has dimensions corresponding to those of a tape cartridge.

5. In combination a tool according to any one of claims 1 to 4, and a read/write head for a tape recording device which comprises a generally block shaped body (10) on one surface of which are defined read/write gaps (16, 17), the head being so shaped and configured as to provide one or more surfaces (18) which permit alignment of the head in a recording device and in which said surface or surfaces are generally co-planar with said read/write gaps.

6. A combination according to claim 5, wherein the head comprises three protions, a central portion (12), and two outer portions (14, 15), the read/write gaps (16, 17) being defined at the junction of said portions and said central portion having a greater axial extent than the two outer portions, the alignment surfaces (18) being defined on the extending part of the central portion.

7. A method of locating a read/write head in a tape recording device, the real/write head being of the type which comprises a generally block-shaped body (10) on one surface of which are defined read/write gaps (16, 17), the head being so shaped and configured as to provide one or more surfaces (18) which permit alignment of the head in a recording device, the method comprising locating said head in a tool according to any one of claims 1 to 4 so that the alignment surfaces on said head engage said alignment element in the tool, locating said tool in the tape compartment of a tape device, and securing the head in the tape device.

## FIG.1

*FIG.2*

# FIG.3

GAP LINE

12  57  56

10

57  56

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 10, no. 84 (P-442)[2141], 3rd April 1986; & JP-A-60 219 606 (KIYANON DENSHI K.K.) 02-11-1985 * Abstract * | 1 | G 11 B 5/48 G 11 B 5/10 G 11 B 5/56 |
| A | Idem --- | 2-4,6 | |
| X | PATENT ABSTRACTS OF JAPAN, vol. 10, no. 34 (P-427)[2091], 8th February 1986; & JP-A-60 182 002 (KIYANON DENSHI K.K.) 17-09-1985 * Abstract * | 1 | |
| A | Idem --- | 2-4,6 | |
| X | DE-A-1 474 538 (TELEFUNKEN) * Page 5, last paragraph - page 7, end of page; figure 2 * | 1 | |
| A | | 2-4 | |
| A | DE-A-2 052 686 (BOGEN) * Page 3, line 10 - page 6, line 10; figure 4 * --- | 1,2 | TECHNICAL FIELDS SEARCHED (Int. Cl.4) G 11 B |
| E | US-A-4 750 069 (C.H. McCONICA) * Column 4, line 34 - column 8, line 61; figures 1-18 * ----- | 1-6 | |

The present search report has been drawn up for all claims

| Place of search | Date of completion of the search | Examiner |
|---|---|---|
| THE HAGUE | 19-01-1989 | LEHNBERG C.R. |

EPO FORM 1503 03.82 (P0401)